# FASCICULE DE BREVET EUROPEEN

(11) **EP 2 887 743 B1**
(45) Date de publication et mention de la délivrance du brevet: **28.09.2016**
(21) Numéro de dépôt: 14199028.3
(22) Date de dépôt: 18.12.2014
(51) Int. Cl.: H04W 40/30, H04L 12/707, H04W 40/34, H04L 12/26, H04W 84/18, H04L 12/703

(54) **Procédé de communication dans un réseau de télécommunications sans fil, programme d'ordinateur et noeud de communication sans fil associés**
Kommunikationsverfahren in einem drahtlosen Telekommunikationsnetz, entsprechendes Computerprogramm und entsprechender drahtloser Kommunikationsknoten
Communication method in a wireless telecommunications network, associated computer program and wireless communication node

(30) Priorité: 18.12.2013 FR 1302991
(43) Date de publication de la demande: 24.06.2015
(73) Titulaire: Thales, 92200 Neuilly Sur Seine (FR)
(72) Inventeur: Delattre, Michel, 92622 Gennevilliers Cedex (FR); Bouyssounouse, Guy, 92622 Gennevilliers Cedex (FR)
(74) Mandataire: Lavoix

(56) Documents cités:
- JONES E P C ET AL: "Practical Routing in Delay-Tolerant Networks", IEEE TRANSACTIONS ON MOBILE COMPUTING, IEEE SERVICE CENTER, LOS ALAMITOS, CA, US, vol. 6, no. 8, 1 août 2007 (2007-08-01), pages 943-959, XP011186229, ISSN: 1536-1233, DOI: 10.1109/TMC.2007.1016
- JOAO A DIAS ET AL: "Performance implications of fragmentation mechanisms on Vehicular Delay-Tolerant Networks", ITS TELECOMMUNICATIONS (ITST), 2011 11TH INTERNATIONAL CONFERENCE ON, IEEE, 23 août 2011 (2011-08-23), pages 436-441, XP032064694, DOI: 10.1109/ITST.2011.6060096 ISBN: 978-1-61284-668-2
- CERF GOOGLE/JET PROPULSION LABORATORY S BURLEIGH A HOOKE L TORGERSON NASA/JET PROPULSION LABORATORY R DURST K SCOTT THE MITRE CORP: "Delay-Tolerant Networking Architecture; draft-irtf-dtnrg-arch-08.txt", 20061201, no. 8, 1 décembre 2006 (2006-12-01), XP015048236, ISSN: 0000-0004
- SCOTT THE MITRE CORPORATION S BURLEIGH NASA JET PROPULSION LABORATORY K: "Bundle Protocol Specification; rfc5050.txt", 20071101, 1 novembre 2007 (2007-11-01), XP015055122, ISSN: 0000-0003

## Description

La présente invention concerne un procédé de communication dans un réseau de télécommunications sans fil comprenant des noeuds de télécommunication sans fil.

La présente invention s'applique tout particulièrement aux réseaux de télécommunication, notamment maillés, comportant des liens de communication radio, présentant des caractéristiques hétérogènes (exemple : UHF, VHF), et/ou intermittentes.

Les réseaux à topologie maillée (en anglais « mesh ») sont des réseaux dont les stations émettrices/réceptrices, encore appelées noeuds de communication, sont connectées l'une à l'autre, sans hiérarchie centrale, formant ainsi une structure en forme de filet. Chaque noeud est adapté pour ainsi recevoir, envoyer et relayer des données.

Les réseaux traditionnels, par exemple à architecture IP (" Internet Protocol ") nécessitent l'existence d'un chemin stable de bout en bout entre un noeud source et un noeud destinataire, avec une bande passante suffisante. Cependant ces conditions sont parfois très difficiles à obtenir, compte-tenu de problèmes de liaison parfois rencontrés entre les satellites et le sol, ou encore entre des moyens terrestres rapidement déployables, du nombre des noeuds et de leur caractère éventuellement mobile. Les paquets ne pouvant être relayés par un noeud vers un noeud voisin du fait d'une liaison défaillante entre les deux noeuds sont détruits.

L'architecture DTN (en anglais « Delay Tolérant Networking ») normée par l'entité " Internet Engineering Task Force " (IETF) dans le document RFC 4838 et s'appuyant sur l'architecture IP, est adaptée aux réseaux comportant des liaisons intermittentes. Dans les réseaux DTN, les données peuvent faire des pauses au niveau des noeuds relais, attendant en cas de liaison vers le prochain noeud temporairement absente (par exemple du fait de la météo ou des affectations horaires des ressources etc.), que cette liaison soit à nouveau disponible pour le service. Cette architecture nécessite l'utilisation de ressources radio supplémentaires pour la transmission d'informations de signalisation et d'encapsulation.

On connaît, par ailleurs, le titre de brevet portugais PT104538B ou le document de JONES E P C ET AL: "Practical Routing in Delay-Tolerant Networks", IEEE TRANSACTIONS ON MOBILE COMPUTING, IEEE SERVICE CENTER, LOS ALAMITOS, CA, US, qui couple des mécanismes DTN avec des procédures de gestion de lien radio.

II existe un besoin de permettre aux noeuds la transmission de données entre un noeud source et un noeud destinataire en utilisant un volume minimal de ressources de communication, en réagissant aux fluctuations rapides de connectivité telles que les apparitions, disparitions, changements de caractéristiques, de liaisons entre les noeuds, notamment celles trop rapides pour être prises en compte par la fonction de routage distribuée des noeuds, qui nécessite par construction un temps de convergence.

A cet effet, suivant un premier aspect, l'invention propose un procédé de communication dans un réseau de télécommunications sans fil comprenant des noeuds de télécommunication sans fil, ledit procédé comprenant, lors de la transmission d'un bloc de données depuis un noeud source à destination d'un noeud destinataire, les étapes suivantes mises en oeuvre par un noeud, ledit noeud comprenant une table de routage dans une mémoire du noeud et étant le noeud source ou un noeud relais recevant et transmettant au moins certains segments dudit bloc:
- le noeud, ayant stocké un ensemble de segments dudit bloc de données, sélectionne, en fonction d'au moins un contenu de sa table de routage en correspondance avec ledit noeud destinataire et/ou en fonction des états des liaisons de télécommunication sans fil entre ledit noeud et ses noeuds voisins, un premier noeud voisin parmi des noeuds voisins du noeud, détermine une taille de segment appropriée à un transfert vers le premier noeud voisin, reformate au moins un segment de l'ensemble de segment(s) conformément à la taille de segment déterminée et transmet au moins ledit segment reformaté audit premier noeud voisin déterminé ;
ledit procédé étant caractérisé en ce que le noeud détecte une modification de ladite table de routage et/ou une modification d'un état de des liaisons de télécommunication sans fil entre ledit noeud et ses noeuds voisins, et suite à ladite détection, effectue une sélection d'un deuxième noeud voisin, stoppe la transmission au premier noeud voisin dudit ensemble de segments stocké avant ladite détection, détermine une taille de segment appropriée à un transfert vers le deuxième noeud voisin déterminé, reformate au moins un segment de l'ensemble de segment(s) et non encore transmis au premier noeud voisin conformément à la taille de segment déterminée pour le transfert vers le deuxième noeud voisin et transmet audit deuxième noeud voisin l'au moins un segment reformaté dudit ensemble de segments.

Le procédé de communication selon l'invention comprend l'une ou plusieurs des caractéristiques suivantes :
- le noeud reçoit des messages du premier noeud voisin acquittant la réception par ledit premier noeud de certains desdits segments transmis et ne transmet pas au deuxième noeud voisin lesdits segments dont la réception a été acquittée par le premier noeud voisin ;
- lorsque le noeud n'a pas reçu de message dudit premier noeud voisin acquittant la bonne réception d'un segment transmis au premier noeud voisin, le noeud transmet, suite à ladite détection, au deuxième noeud voisin ledit segment reformaté conformément à la taille de segment déterminée pour le transfert vers le deuxième noeud voisin ;

- une taille de segment appropriée à un transfert vers un noeud voisin est déterminée en fonction d'au moins un paramètre parmi un taux d'erreurs sur la liaison de télécommunication sans fil entre ledit noeud et le noeud voisin, un délai de transmission sur cette liaison et le maintien de ressource disponible pour un autre voisin sur ladite liaison ;
- le procédé comprend les étapes suivantes pour chaque noeud mis en oeuvre pour la transmission dudit bloc depuis le noeud source et jusqu'au noeud destinataire :
   chaque noeud, suite à la réception de segments dudit bloc de données, mémorise, dans une mémoire du noeud, lesdits segments reçus en correspondance avec la référence unique ;
   lorsqu'un noeud relaye certains au moins des segments reçus du bloc à un noeud voisin et qu'aucun segment dudit bloc n'a encore été échangé entre lesdits noeud et noeud voisin, ledit noeud transmet lesdits segments du bloc et la référence unique associée au bloc ; et
   selon lequel suite à la réception par ledit noeud de ladite référence unique du bloc transmise par un noeud voisin avec lequel le noeud n'a encore mis en oeuvre aucun échange de segments du bloc, le noeud signale audit noeud voisin les segments du bloc déjà mémorisés dans la mémoire du noeud ;
- le noeud maintient dans sa mémoire, en correspondance avec la référence unique du bloc :
   - la liste des noeuds voisins auxquels il a relayé des segments du bloc et mémorise en correspondance de chacun desdits noeuds voisins, les segments du bloc qu'il leur a envoyés ; et/ou
   - la liste des noeuds voisins qui lui ont relayé des segments du bloc et mémorise en correspondance de chacun desdits noeuds voisins, les segments du bloc qu'il a reçu dudit noeud voisin ;
- le noeud indique en outre dans sa mémoire, en correspondance avec lesdits segments du bloc relayés à chaque noeud voisin de la liste, si des acquittements de réception desdits segments du bloc par ledit noeud voisin ont été reçus par ledit noeud ;
- les segments du bloc de données restent mémorisés dans la mémoire du noeud tant qu'un message accusant la bonne réception desdits segments par un noeud situé à N bonds sur la route vers le noeud destinataire n'a pas été reçu par ledit noeud, N étant fixé et supérieur ou égal à 2 ;
- le noeud, suite à la réception de segments d'un bloc de données à destination de plusieurs noeuds destinataires, utilise les capacités diffusantes d'un lien avec ses voisins pour ne pas n-pliquer les segments à transmettre ;
- lorsqu'il y a déjà eu entre ledit noeud et un noeud voisin, un échange de segments du bloc, des segments supplémentaires du bloc sont échangés entre eux sans transmettre la référence unique associée audit bloc et en transmettant avec lesdits segments supplémentaires du bloc une référence du bloc, locale au bond entre lesdits noeuds et noeud voisin, la correspondance entre la référence unique et la référence locale étant mémorisée dans la mémoire du noeud ;
- certains au moins des segments d'un bloc reçus par ledit noeud comportent un en-tête indiquant l'adresse du noeud voisin, mais ne comportent pas d'en-tête indiquant une adresse de noeud destinataire,
ledit noeud, suite à la réception de segments dudit bloc, identifiant le noeud destinataire utilisé pour la sélection d'un noeud voisin auquel transférer lesdits segments chaque noeud, en extrayant de sa mémoire l'adresse d'un noeud destinataire précédemment mémorisée en correspondance avec la référence unique du bloc.

Suivant un deuxième aspect, la présente invention propose un programme d'ordinateur à installer dans un noeud d'un réseau maillé de télécommunication sans fil, ledit programme comportant des instructions pour mettre en oeuvre les étapes d'un procédé selon le premier aspect de l'invention lors d'une exécution du programme par des moyens de traitement du noeud.

Suivant un troisième aspect, la présente invention propose une station émettrice/réceptrice de données, adaptée pour constituer un noeud d'un réseau maillé de télécommunication sans fil, comportant des moyens d'émission et réception sans fil, une mémoire comprenant une table de routage
ladite station étant adaptée pour stocker un ensemble de segments d'un bloc de données à transmettre à destination d'un noeud destinataire et pour sélectionner, en fonction d'au moins un contenu de sa table de routage en correspondance avec ledit noeud destinataire et/ou en fonction des états des liaisons de télécommunication sans fil entre la station et ses noeuds voisins, un premier noeud voisin parmi des noeuds voisins de la station, pour déterminer une taille de segment appropriée à un transfert vers le premier noeud voisin sélectionné, pour reformater au moins un segment de l'ensemble de segment(s) conformément à la taille de segment déterminée et pour transmettre au moins ledit segment reformaté audit premier noeud voisin déterminé via lesdits moyens d'émission et réception sans fil ; ladite station étant caractérisée en ce qu'elle est adaptée pour détecter une modification de ladite table de routage et/ou une modification d'un état des liaisons de télécommunication sans fil entre ladite station et ses noeuds voisins, et pour suite à ladite détection, effectuer une sélection d'un deuxième noeud voisin, stopper la transmission au premier noeud voisin dudit ensemble de segments stocké avant ladite détection, pour déterminer une taille de segment appropriée à un transfert vers le deuxième noeud voisin déterminé, reformater au moins un segment de l'ensemble de segment(s) et non encore transmis au premier noeud voisin conformément à la taille de segment déterminée pour le transfert vers le deuxième noeud voisin et pour transmettre audit deuxième noeud voisin l'au moins un segment reformaté dudit ensemble de segments via lesdits moyens d'émission et réception sans fil.

Ces caractéristiques et avantages de l'invention apparaîtront à la lecture de la description qui va suivre, donnée uniquement à titre d'exemple, et faite en référence aux dessins annexés, sur lesquels :
- la figure 1 représente un noeud radio dans un mode de réalisation de l'invention ;
- la figure 2 représente un réseau de radiocommunication dans un mode de réalisation de l'invention ;
- la figure 3 représente un réseau de radiocommunication dans un mode de réalisation de l'invention ;
- la figure 4 représente un réseau de radiocommunication dans un mode de réalisation de l'invention ;
- la figure 5 représente un réseau de radiocommunication dans un mode de réalisation de l'invention ;
- la figure 6 représente un réseau de radiocommunication dans un mode de réalisation de l'invention ;
- la figure 7 représente un noeud radio dans un mode de réalisation de l'invention ;
- la figure 8 représente un organigramme d'étapes mises en oeuvre dans un mode de réalisation de l'invention.

Un bloc de données comprend un en-tête de bloc qui indique notamment les adresses de chaque noeud destinataire final du bloc, suivi des données utiles à délivrer à chaque noeud destinataire final.
Après segmentation du bloc telle que décrite ci-après, l'en-tête de bloc se trouve dans un segment unique du bloc (ou est découpée dans plusieurs segments du bloc si elle est de taille plus grande qu'un segment), et les données utiles sont elles-mêmes découpées en segment(s) qui, eux, ne comportent pas d'adresses de destinataires finals.

Chaque segment ou groupe de segments de données transmis par un noeud de radiocommunication comporte en outre un en-tête indiquant l'adresse du ou des noeuds relais voisins dudit noeud vers lesquels ce dernier a décidé de le router.

Un fragment de bloc est le résultat d'un réassemblage par un noeud relais d'une suite de segments de bloc comportant la même référence locale de bloc, qui est locale au noeud relais et à son ou ses noeud(s) voisin(s). Un fragment de bloc comprend l'entête du bloc, mais ne comprend pas la totalité des données utiles du bloc.

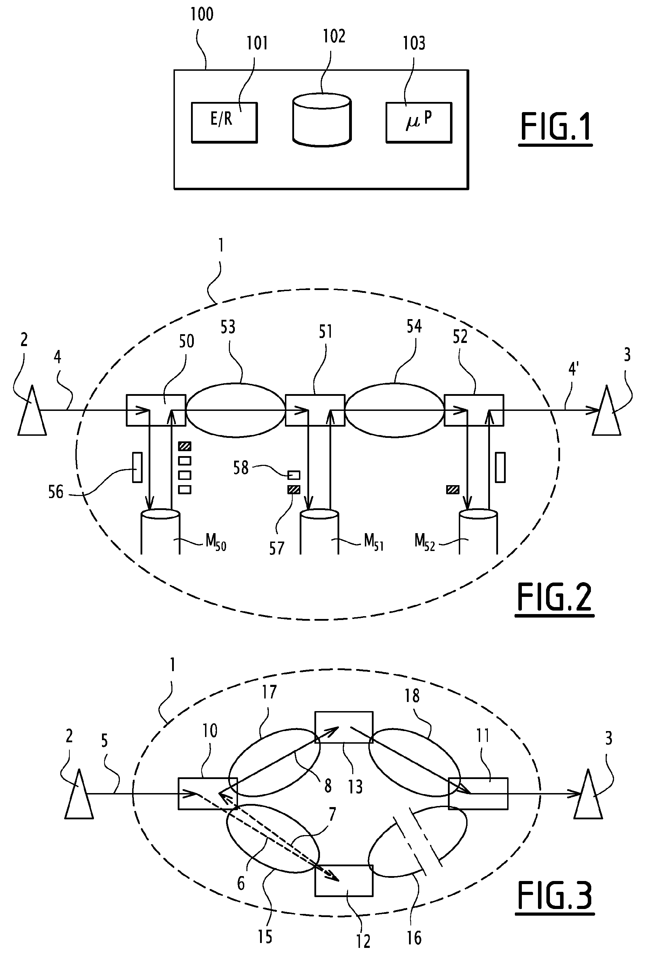

Sur la figure 1, une vue d'une station 100 d'émission/réception radiofréquence, adaptée pour constituer un noeud de radiocommunication d'un réseau maillé dans un mode de réalisation de l'invention, est représentée.

Cette station 100 comporte un ou plusieurs modules d'émission et de réception radiofréquence 101, une mémoire 102 et un microprocesseur 103.

Un tel module d'émission et de réception radiofréquence 101 est adapté pour permettre l'émission radiofréquence (par exemple UHF et/ou VHF), la réception radiofréquence et le traitement de données transmises sur un réseau maillé 1, non représenté sur la figure 1, conformément à un protocole de transmission donné, par exemple IEEE 802.16j. II comprend notamment une fonction de gestion de liens radios permettant à un noeud de détecter ses noeuds voisins (i.e. les noeuds se trouvant dans sa zone de couverture radio) et de connaître l'état des liaisons radio entre ce noeud et chacun de ses noeuds voisins et également l'état des liaisons radio entre ces noeud voisins et leurs noeuds voisins respectifs, via des informations communiquées entre le noeud 100 et ses noeuds voisins. Cet état des liaisons radio est mémorisé et mis à jour dans une section " contexte radio " de la mémoire 102, qui correspond aux états de la couche Liaison, classiquement nommée L2.

La mémoire 102 est adaptée en outre pour stocker une table de routage dynamique tenue à jour par le réseau maillé 1.

Dans un mode de réalisation, tout ou partie des opérations indiquées ci-dessous sont mises en oeuvre par le noeud 100 suite à l'exécution sur le microprocesseur 103 d'instructions logicielles stockées dans la mémoire 102.

Le noeud 100 est en outre adapté pour recevoir un bloc de données en tant que noeud source et le transmettre à un ou des noeud(s) destinataire(s) finals via des noeuds relais du réseau maillé 1.

Le bloc de données est fourni au noeud 100 en tant que noeud source par exemple par une application d'un ordinateur accédant au réseau maillé 1 par le noeud 100.

Lorsqu'il reçoit un tel bloc de données, le noeud 100 est adapté pour lui associer une référence unique de bloc, destinée à identifier le bloc de façon unique dans le réseau maillé 1, et pour segmenter le bloc en segments de bloc dont la taille est adaptée aux aux transmissions sur les liaisons radio.

Comme cela sera détaillé par la suite, cette référence unique sera utilisée pour identifier le bloc ou des segments du bloc par chaque noeud du réseau 1 mis en oeuvre pour acheminer le bloc ou des fragments ou des segments du bloc. Le noeud 100 est adapté pour mémoriser, dans une section de sa mémoire 102 nommée " contexte de bloc " en correspondance avec la référence unique de bloc associée, les segments de blocs, ainsi que l'adresse de chaque destinataire final, et pour chacune de ces adresses, les états de transmission des segments, par exemple à n bonds comme détaillé plus loin.

Par ailleurs, lorsque le noeud 100 transmet, en tant que noeud source ou noeud relais, un bloc de données ou des segments d'un bloc de données, à un noeud voisin avec lequel il n'a pas encore échangé ce bloc ou des segments de ce bloc, le noeud 100 est en outre adapté pour transmettre avec ce bloc ou les segments (par exemple dans l'en-tête du premier segment transmis) la référence unique du bloc telle qu'associée au bloc dans le contexte de bloc stockée dans la mémoire 102, avec l'identifiant du noeud 100 ajoutée à la chaîne des identifiants des noeuds ayant transmis ledit segment jusqu'au noeud 100. Le noeud 100 est en outre adapté pour transmettre, par exemple une unique fois, à ce noeud voisin l'adresse de chacun des destinataires finals du bloc prévus d'être atteints depuis ce noeud voisin en association avec la référence unique du bloc, ce noeud voisin mémorisant alors les adresses des destinataires finals dans son contexte de bloc correspondant à cette référence unique de bloc. Ainsi les adresses des destinataires finals du bloc ne sont nullement transmises avec chaque segment du bloc.

Le noeud 100 est en outre adapté pour indiquer, dans le contexte de bloc relatif au bloc mémorisé dans sa mémoire 102, l'identifiant du noeud voisin en correspondance avec l'identifiant des segments du bloc envoyés audit noeud voisin et l'heure et la date d'envoi, ainsi que la chaîne des identifiants de noeuds ayant relayé ces segments. Le noeud 100 est adapté pour renseigner ultérieurement dans le contexte de bloc associé audit bloc et mémorisé dans sa mémoire 102, quels sont les segments pour lesquels le noeud 100 a reçu du noeud voisin un acquittement de bonne réception de segment.

Similairement, le noeud 100 est adapté pour, lorsqu'il reçoit un bloc de données ou des segments d'un bloc de données qui lui sont transmis par un noeud voisin avec lequel il n'a pas encore reçu ce bloc ou des segments de ce bloc, accompagné(s) de la référence unique associée à ce bloc et des adresses des destinataires finals du bloc, mémoriser, dans une section " contexte de bloc " de sa mémoire 102, le bloc ou les segments de blocs reçus en correspondance avec la référence unique de bloc reçue et les adresses des destinataires finals, en indiquant en outre l'identifiant du noeud voisin lui ayant adressé le bloc ou segments de blocs et l'heure et la date de réception.

Cette référence unique est ainsi partagée par tous les noeuds participant à la transmission du bloc dans le réseau, au contraire des références locales de bloc qui identifient un bloc et/ou ses segments au niveau d'un bond, i.e. d'une liaison entre deux noeuds voisins.

Similairement, le noeud 100 est adapté pour, lorsqu'il reçoit des segments d'un bloc de données qui lui sont transmis par un noeud voisin en provenance duquel il a déjà reçu des segments du bloc, mémoriser dans le contexte de bloc correspondant à la référence unique de bloc, les segments de blocs reçus, en indiquant en outre pour ces segments, l'identifiant du noeud voisin dont ils proviennent et l'heure et la date de réception. On notera que quand il ne s'agit pas de la première transmission entre ces deux noeuds de segments d'un bloc, il n'est pas nécessaire de transmettre à nouveau la référence unique car la correspondance avec la référence unique mémorisée dans le contexte de bloc peut se faire via une référence du bloc, transmise avec les segments entre les deux noeuds, et locale au bond entre les deux noeuds.

Le noeud 100 est adapté pour maintenir et mettre à jour le contexte de bloc relatif à chaque bloc associé à une référence unique de bloc jusqu'à ce qu'une condition d'effacement au moins soit remplie.

Les conditions d'effacement d'un contexte de bloc comportent une condition dépendant de la bonne progression du bloc en aval du noeud 100.

Par exemple, l'effacement du contexte du bloc est autorisé dans la mémoire du noeud 100 s'il reçoit un acquittement, indiquant la référence unique de bloc, de réception du bloc par le noeud destinataire ou par un noeud situé à n bonds (par exemple n étant fixé préalablement à un nombre entier supérieur ou égal 2) en aval du noeud concerné sur la route vers le noeud destinataire.

Lorsque le bloc est destiné à plusieurs noeuds destinataires, l'effacement du contexte du bloc est autorisé lorsque l'ensemble des acquittements pour tous les noeuds destinataires (ou par des noeuds respectifs situés à n bonds du noeud 100 sur la route vers les noeuds destinataires) est reçu.

C'est la chaîne des identifiants des noeuds amont placée dans l'en-tête du segment transmis comportant également la référence unique qui permet aux noeuds aval de les informer ainsi de la bonne progression du bloc.

Dans un mode de réalisation, l'effacement du contexte d'un bloc dans le noeud 100 est dépendant de la réception par le noeud 100 d'informations comportant la référence unique du bloc (et non pas une référence du bloc locale à une liaison entre deux noeuds) et indiquant une coopération, quant à la transmission des segments du bloc entre des noeuds en aval du noeud 100 sur la route vers un noeud destinataire final. Certains de ces noeuds coopérant ont transmis des segments que certains autres de ces noeuds n'ont pas transmis, l'ensemble des segments transmis ont néanmoins par combinaison permis de retrouver l'intégralité du bloc sur l'un des noeuds coopérants qui peut déclencher un effacement sur des noeuds coopérants amont. Ainsi l'effacement est conditionné par la reconstitution d'un bloc complet par un noeud : on se retrouve alors dans un état similaire à l'état initial où un noeud détient le bloc complet, simplement ce noeud est situé encore plus en aval du noeud source.

Dans un mode de réalisation, l'effacement du contexte du bloc est en outre autorisé dans la mémoire du noeud 100 si un temps maximal prédéterminé d'écoulement de bloc a été atteint. En effet, un bloc acheminé trop lentement peut contenir des données périmées et il est préférable de le détruire, notamment si le bloc contient une date d'expiration. L'effacement du contexte du bloc s'accompagne du relâchement des segments mémorisés.

Ainsi suivant l'invention, un bloc ou au moins un même segment d'un bloc de données est mémorisé sur plusieurs noeuds successifs d'une route suivie par un bloc de données.

Dans un mode de réalisation, le noeud 100 est adapté pour, lorsqu'il doit transmettre (en tant que noeud source) ou relayer (en tant que noeud relais) un ou des segments d'un bloc adressé à un destinataire final, déterminer lors du traitement du premier segment d'une suite de segments d'un bloc, parmi ses noeuds voisins, le noeud voisin (noeud voisin n°1) auquel il doit transmettre cette suite de segments, en fonction du contenu associé au destinataire final dans la table de routage du noeud 100a moment de cette détermination, et, le cas échéant, en fonction de l'état des liaisons radio indiqué dans le contexte radio mémorisé dans sa mémoire 102 au moment de cette détermination. Le noeud 100 est adapté pour transmettre à ce noeud voisin déterminé lors d'une telle décision de routage, ce premier segment du bloc, ainsi que les segments suivants du bloc et ce tant qu'il n'y a pas de modifications de la table de routage ou des états de liaison. Le noeud 100 applique à ces segments le cas échéant un reformatage avant transmission, comme expliqué plus bas, de manière à ce que la taille des segments transmis par le noeud 100 vers le noeud voisin n°1 soit optimale.

Le noeud 100 est en outre adapté pour détecter une modification de la table de routage ou des états de liaison et pour suite à une telle détection, effectuer, en fonction de la table de routage ou des états de liaison ainsi modifiés, une nouvelle détermination du noeud voisin (noeud voisin n°2), pour stopper la transmission de segments du bloc vers le noeud voisin n°1 et et pour transmettre le prochain segment à traiter au noeud voisin nouvellement déterminé dans cette nouvelle décision de routage.

La nouvelle décision de routage est notamment appliquée aux segments qui ont été reçus par le noeud 100 avant la nouvelle décision de routage et qui n'ont pas encore été transmis par le noeud 100 au noeud voisin n°1 (ou dans un mode de réalisation, qui ont été transmis, mais pour lesquels le noeud 100 n'a pas encore reçu de message d'acquittement indiquant que le noeud voisin n°1 les a bien reçu). Le noeud 100 applique le cas échéant aux segments transmis au noeud voisin n°2 un reformatage, comme expliqué plus bas, de manière à ce que la taille des segments transmis par le noeud 100 vers le noeud voisin n° 2 soit optimale.

Ainsi une décision de routage est applicable par le noeud 100 aux segments, y compris pour les segments ne comportant que des données utiles et ne comportant pas d'en-tête avec adresse(s) de destinataire final ; elle est appliquée dans ce cas sur la base des adresses des destinataires finals mémorisées dans le contexte du bloc en correspondance avec la référence unique du bloc auquel appartient le segment.

Le noeud 100 est en outre adapté, suite à une décision de routage vers un noeud voisin, et en fonction des informations du contexte radio (états de la couche L2) qualifiant la liaison entre le noeud 100 et ce noeud voisin, pour transmettre une suite de segments de bloc en groupes de segments de manière à optimiser la transmission, ou pour transmettre une suite de segments de bloc sous la forme d'une suite de plus petits segments, de manière à optimiser la transmission.

Cette opération de reformatage des segments transmis, comprenant une fragmentation ou un réassemblage des segments reçus, est réalisée par le noeud 100 de manière à ce que la taille des segments transmis soit la taille optimale, i.e. appropriée à un transfert optimal vers le noeud voisin déterminé.

Cette taille optimale est déterminée par exemple en fonction d'un taux d'erreurs et/ou d'un délai de transmission sur la liaison entre le noeud 100 et le noeud voisin et/ou en fonction de la directivité de cette liaison. Ce sont donc les états de transmission sur les liaisons entre noeuds voisins qui pilotent la transmission du bloc en groupe de segments ou en plus petits segments, en temps réel.

Le taux d'erreurs conduit à des mécanismes de détection et de corrections. Si la correction se fait par répétition déclenchée par absence d'acquittement, un délai de transmission important va amener une correction tardive et donc dégrader l'efficacité en occupant des ressources radio avec des transmissions inexploitables. Enfin la directivité évalue dans quelle mesure une transmission du noeud à un voisin occupe la ressource utilisable pour d'autres noeuds voisins du noeud 100.

Le noeud 100 est adapté pour mémoriser dans le contexte de bloc dans sa mémoire 102 correspondant à la référence unique du bloc considéré, les opérations de fragmentation/réassemblage en groupe de taille adaptées aux caractéristiques des liaisons radio ainsi réalisées pour une suite de segments du bloc.

Dans un mode de réalisation, des échanges entre le noeud 100 et le noeud voisin auquel des segments d'un bloc associé à une référence unique sont à transmettre permettent au noeud 100 d'informer le noeud voisin de son intention de lui transmettre des segments du bloc en indiquant la référence unique du bloc. Le noeud voisin peut alors informer le noeud 100 des segments qu'il stocke déjà dans son contexte de bloc associé à la référence unique. De la sorte, seuls les segments non encore reçus par le noeud voisin (le cas échéant par d'autres noeuds que le noeud 100) seront effectivement relayés par le noeud 100 au noeud voisin.

Dans l'art antérieur, dans un noeud, la décision de routage était prise relativement à un segment A (qui dans l'art antérieur indiquait les adresses des destinataires finals) reçu par le noeud, puis le segment reçu était par exemple fractionné par le noeud en plusieurs segments A₁, ..., Aₙ, et chacun de ces segments A₁, ..., Aₙ était transmis par le noeud conformément à la décision de routage prise pour le segment A.

Comme indiqué plus haut, dans un mode de mise en oeuvre de l'invention, la décision de routage est au contraire évaluable au regard de chaque segment Aᵢ, i=1 à n, issu d'une opération de segmentation réalisée au sein du noeud : les destinations de relayage peuvent être donc mises à jour beaucoup plus rapidement au sein d'un noeud, sans avoir à attendre la fin de la transmission du segment A évitant des occupations des liaisons radio inutiles.

En outre, comme les adresses de destinataires finals ne sont pas transmises avec chaque segment du bloc mais sont mémorisées dans le contexte du bloc dans les noeuds relais, le volume d'informations à transmettre entre noeuds est nettement réduit.

Le contexte d'un bloc dans un noeud mémorise ainsi la référence unique du bloc, les adresses des destinataires finals, les segments du bloc reçus et envoyés par le noeud et pour chaque segment reçu (respectivement envoyé), les identifiants des noeuds voisins ayant transmis au noeud ce segment, ainsi que les dates et heures de réception correspondantes (respectivement les identifiants des noeuds voisins auxquels le noeud a transmis le segment, ainsi que les dates et heures d'envoi correspondantes.

Sur la figure 2, le réseau 1 présente une configuration dans laquelle un noeud 50 et un noeud 51 sont reliés par un bond radio 53, tandis que le noeud 51 et un noeud 52 sont eux-mêmes reliés par un bond radio 54.

Les noeuds 50, 51 et 52 sont similaires au noeud 100 présenté plus haut en référence à la figure 1.

Chacun de ces noeuds, respectivement 50, 51 et 52, comportent une mémoire, respectivement M₅₀, M₅₁, M₅₂, similaires à la mémoire 102 représentée en figure 1.

Un équipement 2, par exemple un ordinateur, appelé ici source d'information 2, est connecté, par exemple par une liaison filaire 4, au noeud 50, qui lui donne accès au réseau 1.

Un équipement 3, par exemple un ordinateur, appelé ici destinataire d'information 3, est connecté, par exemple par une liaison filaire 4', au noeud 52, qui lui donne accès au réseau 1.

La source d'information 2 requiert la transmission d'un bloc de données 56 au destinataire d'information 3. Le bloc de données 56 est fourni par la source d'informations 2 au noeud 50. Une référence de bloc, unique dans le domaine de routage associé au réseau 1, est associée par le noeud 50, au bloc 56.

Le bloc 56 est fragmenté par le noeud 50 en une pluralité de segments.

Les segments, l'identifiant du destinataire, l'identifiant du noeud voisin 51 et la date et heure sont mémorisés dans un contexte de bloc associé à la référence unique du bloc 56 dans la mémoire M₅₀.

Le premier segment comporte la référence unique du bloc.

Le noeud 50 détermine en fonction de sa table de routage que celui des noeuds voisins auquel il convient d'adresser le bloc de données pour le destinataire 3 est le noeud 51. Le noeud 50 transmet donc les segments au noeud voisin 51, qui à son tour, mémorise ces segments dans un contexte de bloc associé à la référence unique reçue dans le premier segment 57 avec les autres informations du contexte de bloc.

Le noeud 51 ayant réassemblé correctement un début de bloc dans des proportions suffisantes (au regard d'un critère fixé et modulable ; ici par exemple, la réception des deux premiers segments 57, 58), transmet à son tour les segments reçus du bloc 56.

Comme le noeud 51, le noeud 52 initialise et renseigne le contexte de bloc associé au bloc 56.

Le noeud 52, une fois qu'il a reçu la totalité du bloc 56, le remet au destinataire 3, puis il libère la zone de la mémoire M₅₂ dans laquelle le contexte de bloc associé au bloc 56 était stocké.

Une fois que le noeud 51 a reçu du noeud 52 l'acquittement de bonne réception du dernier segment du bloc 56 reçu par le noeud 51, le noeud 51 libère également la ressource mémoire dans sa mémoire M₅₁, dans laquelle le contexte de bloc associé au bloc 56 était stocké.

L'acheminement du bloc 56 au noeud 50 est également signalé au noeud 50, identifié grâce à la chaîne des identifiants stockée dans le contexte du bloc 56 des noeuds, qui de même libère la ressource mémoire dans sa mémoire M₅₀ de stockage du contexte du 56. Si le noeud 52 avait un lien de transmission de 52 à 50, ce signal pourrait lui être envoyé directement sans passer par le noeud 51.

Comme illustré ci-dessus, la référence unique d'un bloc est utilisée pour initialiser un contexte de bloc dans un noeud sur la route entre une source et un destinataire. Si un noeud aval reçoit de plusieurs noeuds amonts distincts de son voisinage radio, et/ou d'un même noeud via plusieurs liaisons radio (éventuellement entre le noeud aval et un même noeud amont voisin) des segments associés à la même référence, le noeud aval réassemble les segments et acquitte leur bonne réception à partir des informations mémorisées dans le contexte associé, dans la mémoire du noeud aval, à cette référence unique. Par exemple, il informe chaque noeud voisin amont de la bonne réception des segments envoyés par ce noeud voisin amont.

Les chemins empruntés par les segments forment un arbre dont la racine est le noeud ayant mémorisé le bloc dans son entier et dont les branches finissent par se rejoindre au moins au noeud destinataire. Dans un mode de réalisation, si un noeud aval a déjà des segments reçus dont la liste des noeuds amont contient le noeud N et qu'il reçoit des segments complémentaires d'un noeud voisin amont indiquant que ces segments proviennent aussi d'un noeud N, le noeud aval peut prévenir directement le noeud N.

Différents avantages de l'invention dans le réseau maillé 1 vont maintenant être mis en évidence en référence aux figures. Les noeuds représentés sur les différentes figures sont similaires au noeud 100 de la figure 1. Seules certaines des opérations qu'ils mettent en oeuvre conformément à l'invention et indiquées plus haut sont explicitées ci-dessous.

En référence maintenant à la figure 3, de la même façon que sur la figure 2, une source 2 connectée au réseau maillé 1 par un noeud 10 fournit un bloc de données au noeud 10 (étape 5) et requiert sa transmission au destinataire 3 accédant au réseau 1 par le noeud 11.

A ce moment, le noeud 10 a pour noeud voisin le noeud 13 via une liaison radio 17 et le noeud 12 via une liaison 15. Le noeud 11 a pour noeud voisin le noeud 13 via une liaison radio 18 et le noeud 12 via une liaison 16.

Le noeud 10 prend la décision de router les segments du bloc à l'aide de sa table de routage, vers le noeud 12 et commence donc à transmettre les segments vers le noeud 12 (étape 6). Une fois mémorisés par le noeud 12, les premiers segments du bloc ne peuvent être transmis au noeud 11, du fait d'une dégradation ou coupure de la liaison 16, détectée par la fonction de gestion de liens radios du noeud 12. Le noeud 12 envoie au noeud 10 un message signalant (étape 7) la perte de route pour le bloc, indiquant la référence unique du bloc. C'est la mémorisation du bloc dans le contexte du noeud 10 qui va permettre le-routage du bloc (étape 8) vers le lien 13, via la liaison 17, dès que ces échanges directs entre les fonctions de gestion de liens radio des noeuds 10 et 12 auront signalé la perte de route.

Ce sont donc les états de transmission sur les liaisons entre noeuds voisins qui pilotent le re-routage des segments, en temps réel.

Dans un réseau DTN de l'art antérieur, le bloc aurait été transmis de manière fiabilisée (i.e. avec mise en oeuvre d'acquittement) entre les deux noeuds 10,12 et la dégradation de route aurait provoqué un retour en arrière du bloc du noeud 12 vers le noeud 10, et donc une réémission du bloc sur la liaison 15.

Dans un réseau IP de l'art antérieur, sans mise en oeuvre DTN, le noeud 10 aurait transmis ses paquets vers le noeud 12, et sur absence d'acquittement reçu de la part du destinataire, le noeud 12 aurait retransmis les paquets jusqu'à mise à jour dans le réseau 1 de la table de routage du noeud 10 prenant en compte la dégradation de la liaison 16.

Ce cas représenté en figure 3 illustre ainsi l'efficacité de l'invention lors d'états transitoires d'un routage pro-actif.

L'invention permet ainsi de réduire la consommation de ressources radio due aux retransmissions inefficaces et les temps d'acheminement supplémentaires observés dans les réseaux de l'art antérieur : le temps d'écoulement d'un bloc de données et la consommation de ressources radio sont minimisés notamment lors des fluctuations de topologie du réseau.

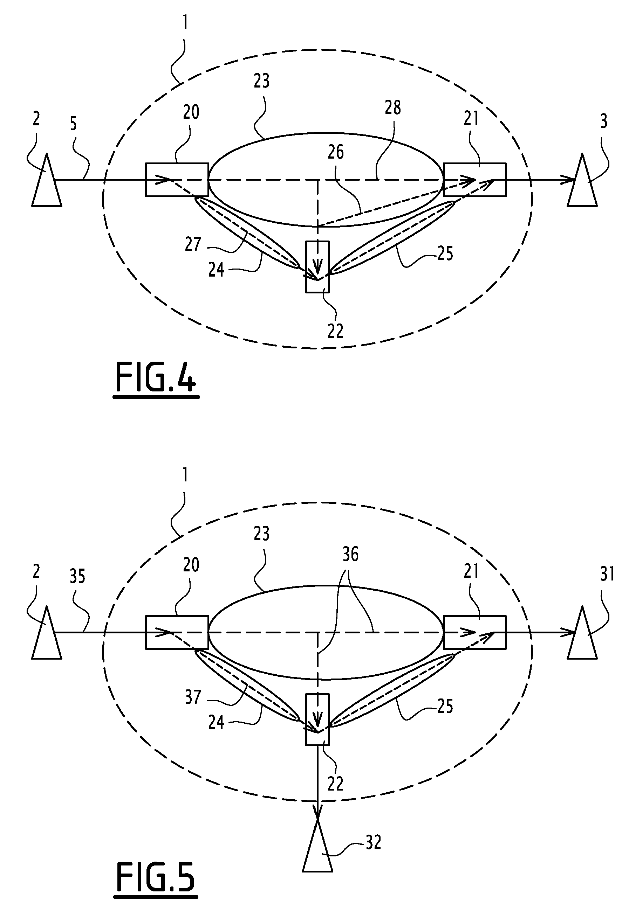

Dans le cas représenté en figure 4, une source 2 connectée au réseau maillé 1 par un noeud 20 fournit un bloc de données au noeud 20 (étape 5) et requiert sa transmission au destinataire 3 accédant au réseau 1 par le noeud 21.

A ce moment, le noeud 20 a pour noeud voisin le noeud 21 via une liaison radio 23 et le noeud 22, via une liaison 24 et aussi via la liaison 23. Le noeud 21 a pour noeud voisin, outre le noeud 20 et le noeud 22 par la liaison 23, le noeud 22 via une liaison radio 25. La liaison 23 est stable et permet une diffusion simultanée d'informations aux noeuds 21 et 22. Les liaisons 24 et 25 sont peu stables, mais offrent parfois des débits importants.

Lorsque le noeud 20 prend sa décision de routage, il utilise la liaison 24 car il a connaissance de la route à moindre coût vers le noeud 21 via 22 selon les métriques du protocole de routage distribué. Le noeud 20 transmet ainsi (étape 27) les segments du bloc au noeud 22 qui mémorise ainsi progressivement le bloc dans son contexte de bloc associé.

Une dégradation du lien 25 entre les noeuds 22 et 21 oblige le noeud 22 à utiliser en parallèle la liaison 23 et la liaison 25 (étapes 25 et 26) pour acheminer vers le noeud 21 les segments du bloc qu'il a mémorisés jusqu'alors.

Dès que les échanges sur les états L2 apprennent au noeud 20 que le noeud 22 utilise les liaisons 25 et 23 pour atteindre le noeud 21, le noeud 20 stoppe la transmission sur la liaison 24 des segments du bloc non encore transmis au noeud 22. Puis le noeud 20 transmet le solde des segments sur la liaison 23 (étape 28) en les adressant cette fois-ci au noeud voisin destinataire 21.

Le noeud destinataire réassemble ensuite l'ensemble des segments reçus depuis les différentes liaisons et noeuds grâce à la référence unique associée au bloc.

Dans un réseau DTN de l'art antérieur, le bloc, une fois reçu par le noeud 22, aurait été fragmenté en deux sous-blocs. Le premier sous-bloc aurait suivi la route entre les noeuds 22 et 21 via la liaison 25 ; le second sous-bloc aurait suivi la route entre les noeuds 22 et 21 via la liaison 23.

Dans un réseau IP sans mémorisation DTN, le noeud 20 aurait émis des paquets le long de la route 20-22-21 via les liaisons 24, 25, avec des retransmissions lors de pertes de paquets dues aux dégradations et changements de route.

La segmentation et le réassemblage progressifs selon l'invention pilotés par les mécanismes de fiabilisation entre noeuds relais voisins permettent de prendre en compte les opportunités de dégradations de liens sans attendre une convergence du protocole de routage, et avec un temps de réactivité réduit. Ces mécanismes de fiabilisation peuvent comprendre des méthodes de contrôles d'erreurs avec demande de répétition (ARQ Automatic Repeat reQuest) et/ou des méthodes de corrections d'erreurs par un codage (FEC Forward Error Correction).

Ce cas représenté en figure 4 illustre ainsi la réactivité, et le gain en temps d'acheminement, que permet l'invention face aux opportunités et dégradations de liaisons radio.

Dans le cas de la figure 5, une source 2 connectée au réseau maillé 1 par un noeud 20 fournit un bloc de données au noeud 20 (étape 35) et requiert sa transmission aux destinataires 31 et 32 accédant au réseau 1 par le noeud 21 et le noeud 22 respectivement.

Le noeud 20 a pour noeud voisin le noeud 21 via une liaison radio 23 et le noeud 22, via une liaison 24 et aussi via la liaison 23. Le noeud 21 a pour noeud voisin, outre le noeud 20 et le noeud 22 par la liaison 23, le noeud 22 via une liaison radio 25. La liaison 23 est stable. Les liaisons 24 et 25 sont peu stables, mais offrent parfois des débits importants.

Le cas représenté en figure 5 illustre l'utilisation des capacités diffusantes selon l'invention. Le noeud 20 prend la décision de routage suivante : il transmet les segments du bloc au noeud 22 sur la liaison 24 (étape 37) et en parallèle les transmet sur la liaison 23 aux noeuds 22 et 21 (étape 36). Le noeud 22 transmet en outre au noeud 21 via la liaison 25 ceux des segments du bloc qui ne sont alors pas encore reçus par le noeud 21 du fait d'un débit sur la liaison 23 bien moindre que sur les liaisons 24 et 25. Cette parallélisation des émissions va soulager la fiabilisation.

Dans un réseau DTN de l'art antérieur mettant en oeuvre une fiabilisation de type TCP entre les noeuds DTN, la transmission n'aurait pas pu bénéficier d'un acheminement multicast sur la liaison 23.

Dans un réseau IP de l'art antérieur, l'utilisation des capacités diffusantes de la radio nécessite l'acheminement des paquets IP selon un arbre de diffusion dont l'établissement et le maintien génère de la signalisation à transmettre en plus du bloc lui-même.

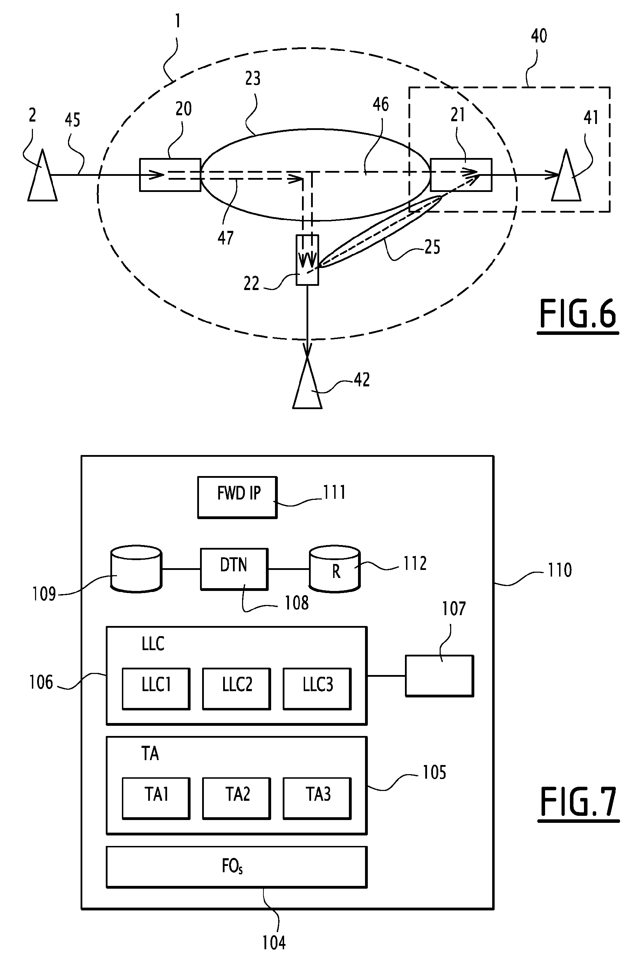

Dans le cas de la figure 6, le noeud 20 a pour noeud voisin le noeud 22, et, parfois, le noeud 21 selon sa position géographique, via une liaison radio commune 23.

Le noeud 21 a parfois pour noeud voisin le noeud 22 (selon sa position géographique) également via une liaison radio 25.

Une source 2 connectée au réseau maillé 1 par un noeud 20 fournit un bloc de données au noeud 20 (étape 45) et requiert sa transmission aux destinataires 41 et 42 accédant au réseau 1 par le noeud 21 et le noeud 22 respectivement.

Au moment où le noeud 20 prend sa décision de routage, le destinataire 41 n'est pas joignable du fait de la position géographique du noeud 21.

Le noeud 20 transmet les premiers segments du bloc au noeud 22 sur la liaison 23. Ces premiers segments sont reçus par le seul noeud 22. Le noeud 21 entre alors dans le réseau 1 et se trouve en liaison radio 23 avec le noeud 20 et en liaisons radio 23 et 25 avec le noeud 22. Le noeud 20 poursuit alors la transmission des segments du bloc restant à transmettre sur la liaison 23, à destination des noeuds 21 et 22, tandis que le noeud 22 transmet lui, au noeud 21 via la liaison 25, les premiers segments du bloc qu'il avait mémorisés.

La coordination à un ou deux bonds entre les noeuds d'origine, relais et destinataire(s) au sujet des segments d'un bloc qui est permise par la mémorisation des contextes de blocs selon l'invention, optimise la transmission en cas de mobilité de noeuds.

Ainsi, le fonctionnement d'un réseau dans les modes de réalisations tels que décrit ci-dessus met en oeuvre les règles suivantes :
- allouer à chaque bloc de données à acheminer une référence, unique dans le réseau, associé à un domaine de routage, mettant en oeuvre l'invention ;
- partager dans tous les noeuds traitant le bloc de données ou une partie du bloc, cette référence pour identifier et mémoriser un contexte de bloc ;
- utiliser un routage dynamique de bond en bond pour mettre à jour des tables de routage cohérentes sur tous les noeuds relais ;
- construire et maintenir un arbre de diffusion multicast à chaque noeud relais pour l'acheminement multicast en fonction des informations de routage ;
- transmettre de bond en bond de manière fiabilisé (i.e. avec accusé de bonne réception) les segments selon les informations de routage tout en permettant au cours de la transmission l'interruption de transmission sur des liens dégradés ou rompus et l'utilisation de nouveaux liens détectés par le noeud ;
- reprendre à chaque noeud relais, selon de nouvelles informations de routage cohérentes mises à jour depuis le début de la transmission du bloc dans le réseau, la transmission d'un bloc partiellement transmis en utilisant en préambule la référence unique pour ne pas retransmettre des informations déjà stockées par le noeud relais suivant ;
- informer les noeuds ayant transmis le bloc, ou une partie du bloc, de la progression du bloc dans le réseau ;
- libérer l'espace de stockage d'un noeud lorsque l'acheminement du bloc a progressé de N noeuds intermédiaires au-delà du noeud (N nombre entier fixé, supérieur ou égal à 2).

La présente invention impose la mémorisation des segments de blocs de données et des informations de contexte de bloc relatives au bloc de données et permet ainsi de corriger les effets de mauvaises décisions de routage des noeuds-relais et de minimiser les retransmissions de fragments lors de la fiabilisation.

La présente invention permet de tirer parti des variations de disponibilité des liaisons sans fil, de répartir le trafic sur les liaisons disponibles et de réduire les transmissions d'information dues aux répétitions sur erreur, aux re-routages...

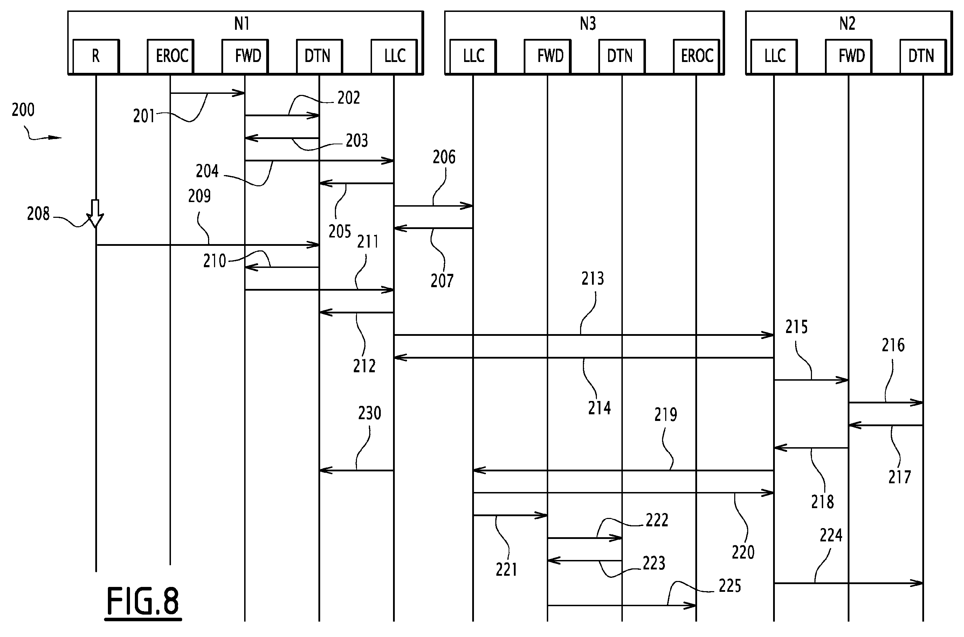

Les figures 7 et 8 illustrent un exemple de mise en oeuvre de l'invention.

La figure 7 est une vue de l'architecture d'un noeud 110 dans un mode de mise en oeuvre de l'invention. Le noeud 110 comporte un module 104 " formes d'ondes " adapté pour à l'émission, mettre les données à émettre sous le format nécessaire pour l'émission radio selon celle des normes (UHF, VHF...) retenue pour l'émission et à la réception, pour traiter des données reçues sous le format nécessaire pour la transmission radio.

Un module TA 105 permet au noeud de traiter simultanément plusieurs instances de liens radio (ici trois instances : TA1, TA2, TA3) tout en uniformisant les traitements réalisés par le noeud dans les blocs mentionnés ci-après.

Le noeud 110 comporte un module de gestion de lien radio LLC 106 dans lequel, chaque instance de lien radio fait l'objet d'une gestion appropriée par des couches L2 respectives (LLC1, LLC2, LLC3). Au module de gestion LLC 106 est associée une base de données 107 mémorisant les informations de contexte de fiabilisation en correspondance des références uniques de blocs.

Le noeud 110 comporte en outre un module DTN 108 associé à une base de données 109, dans laquelle les segments de blocs reçus sont mémorisés en correspondance avec leur référence unique de bloc. Une base R112 " topologie " fournit au module DTN 108 des informations de routage dynamique cohérente (calcul de route) et également dans le cas considéré des informations de découverte de topologie de voisinage. Un module d'aiguillage IP 111 (" Forwarder IP ") est chargé d'aiguiller les paquets IP.

Les bases 107 et bases 109 sont liées.

Dans ce mode de réalisation, le bloc d'information est un paquet IP qui peut être de grande taille (jumbogram IPv6) et chaque bloc est réassemblé à chaque bond.

La figure 8 représente les échanges entre 3 noeuds N1, N2, N3 similaires au noeud 110 de la figure 7, mettant en oeuvre les fonctions suivantes :
EDGE : fonction d'interface entre le réseau et les sources/destinataires de bloc ;
FWD : aiguillage de paquets IP mis en oeuvre à l'aide du bloc d'aiguillage IP 111 ;
R : fonction de routage regroupant la découverte de topologie et le calcul de route mise en oeuvre à l'aide de la base R112 ;
DTN : fonction de mémorisation de blocs et de segmentation/réassemblage mise en oeuvre à l'aide du bloc DTN 108 ;
LLC : fonction de fiabilisation entre noeuds mise en oeuvre à l'aide du bloc LLC 106.

Dans une étape 201, un bloc d'information (un paquet nommé D3), destiné à deux destinataires, l'un connecté au noeud N2, l'autre au noeud N3, est reçu d'une source par le noeud N1, et est fourni par la fonction EDGE à la fonction FWD. Cette dernière l'aiguille vers la fonction DTN (étape 202), qui lui alloue sa référence unique de bloc, mémorise cette dernière avec le paquet D3 dans sa base 109, avant de le fournir à nouveau, avec sa référence unique de bloc, à la fonction FWD (étape 203). La décision de routage est de transmettre le bloc vers le premier noeud voisin N3 via un moyen VHF, sur la base de la connaissance de la topologie du réseau et de l'application de métriques de routage de la fonction R. Le bloc D3 est donc fourni à la fonction LLC du noeud N1 avec comme instruction de l'émettre vers N3 sur le moyen VHF (étape 204).

La fonction LLC du noeud N1 indique à la fonction DTN de N1, lors de l'échange préalable avec N3, le début d'émission du paquet (étape 205). Dans une étape 206, 15 segments sur 100 du paquet D3 sont bien émis. Le noeud voisin N3 acquitte la bonne réception des 10 premiers (étape 207).

Dans une étape 208, la fonction R du noeud N1 détermine la survenue d'une nouvelle liaison radio (moyen UHF) avec le noeud N2, un nouveau voisin de N1. Cette opportunité est signalée à la fonction DTN, qui scanne alors la liste des blocs en cours d'émission dans la base 109 (étape 209). La fonction DTN relance alors l'aiguillage des blocs en cours d'émission qui sont impactés par ce changement de voisinage (étape 210). Une instruction est fournie par la fonction DTN à la fonction LLC du noeud N1, indiquant que le bloc D3 est à émettre sur le moyen UHF vers le nouveau voisin N2 (étape 211). La fonction LLC du noeud N1 indique à la fonction DTN de N1, lors de l'échange préalable avec N2, le début d'émission du paquet (étape 212). Les 100 segments du bloc D3, soit la totalité du bloc D3, sont émis par la fonction LLC du noeud N1 vers le noeud N2 (étape 213) qui les reçoit. Un acquittement de bonne réception des 100 paquets est émis par la fonction LLC du noeud N2 à la fonction LLC du noeud N1 (étape 214), donnant lieu à la fourniture de l'information de fin de traitement du paquet D3 à la fonction DTN et à la libération des zones mémoires occupées dans le noeud N1 par le bloc D3 et les informations de contexte associées (étape 230).

Le bloc D3 complet, réassemblé, est remis à la fonction DTN, via les fonctions LLC et FWD (étapes 215, 216), qui le mémorise et prend en charge la poursuite de l'acheminement du bloc.

Comme le noeud N3 n'avait pas reçu complètement le bloc D3, le noeud N1 a indiqué dans le bloc D3 transmis au noeud N2 l'instruction de transmettre le bloc au destinataire attaché au noeud N3. La fonction DTN du noeud N2 décide alors de router le bloc vers le noeud N3 voisin et transmet le bloc D3 et l'instruction de routage à la fonction FWD (étape 217) qui l'aiguille vers la fonction LLC du noeud N2 (étape 218).

La fonction LLC du noeud N2 transmet à la fonction LLC du noeud N2 la référence unique du bloc D3. La fonction LLC du noeud N2 indique en réponse qu'elle a reçu les 10 premiers segments de D3, puis les 90 segments restants sont transmis par N2 sur le moyen UHF au noeud N1 (étape 219), qui en acquitte la bonne réception (étape 220). Suite à la réception de cet acquittement, l'information de fin de traitement du paquet D3 est fournie par la fonction LLC du noeud N2 à la fonction DTN du même noeud et les zones mémoires occupées dans le noeud N2 par le bloc D3 et les informations de contexte associées sont libérées (étape 224).

Dans le noeud N3, le bloc D3 est aiguillé via la fonction FWD, à la fonction DTN pour mémorisation du bloc et de son contexte de bloc (étapes 221, 222). Puis le bloc D3 est remis, depuis la fonction DTN et via la fonction FWD, à la fonction EROC (étapes 223, 225). On notera que des étapes similaires aux étapes 223, 225 sont effectuées au sein du noeud N2 pour remettre le bloc au destinataire connecté au noeud N2.

## Revendications

1. Procédé de communication dans un réseau de télécommunications (1) sans fil comprenant des noeuds (100) de télécommunication sans fil, ledit procédé comprenant, lors de la transmission d'un bloc de données depuis un noeud source (50) à destination d'un noeud destinataire (52), les étapes suivantes (51) mises en oeuvre par un noeud, ledit noeud comprenant une table de routage dans une mémoire (102) du noeud et étant le noeud source ou un noeud relais recevant et transmettant au moins certains segments dudit bloc:
- le noeud, ayant stocké un ensemble de segments dudit bloc de données, sélectionne, en fonction d'au moins un contenu de sa table de routage en correspondance avec ledit noeud destinataire et/ou en fonction des états des liaisons de télécommunication sans fil entre ledit noeud et ses noeuds voisins, un premier noeud voisin parmi des noeuds voisins du noeud, détermine une taille de segment appropriée à un transfert vers le premier noeud voisin, reformate au moins un segment de l'ensemble de segment(s) conformément à la taille de segment déterminée et transmet au moins ledit segment reformaté audit premier noeud voisin déterminé ;
ledit procédé étant **caractérisé en ce que** le noeud détecte une modification de ladite table de routage et/ou une modification d'un état de des liaisons de télécommunication sans fil entre ledit noeud et ses noeuds voisins, et suite à ladite détection, effectue une sélection d'un deuxième noeud voisin, stoppe la transmission au premier noeud voisin dudit ensemble de segments stocké avant ladite détection, détermine une taille de segment appropriée à un transfert vers le deuxième noeud voisin déterminé, reformate au moins un segment de l'ensemble de segment(s) et non encore transmis au premier noeud voisin conformément à la taille de segment déterminée pour le transfert vers le deuxième noeud voisin et transmet audit deuxième noeud voisin l'au moins un segment reformaté dudit ensemble de segments.

2. Procédé de communication selon la revendication 1, selon lequel le noeud reçoit des messages du premier noeud voisin acquittant la réception par ledit premier noeud de certains desdits segments transmis et selon lequel :
- ledit noeud ne transmet pas au deuxième noeud voisin lesdits segments dont la réception a été acquittée par le premier noeud voisin ; et/ou
- lorsque le noeud n'a pas reçu de message dudit premier noeud voisin acquittant la bonne réception d'un segment transmis au premier noeud voisin, le noeud transmet, suite à ladite détection, au deuxième noeud voisin ledit segment reformaté conformément à la taille de segment déterminée pour le transfert vers le deuxième noeud voisin.

3. Procédé de communication selon l'une quelconque des revendications précédentes, selon lequel une taille de segment appropriée à un transfert vers un noeud voisin est déterminée en fonction d'au moins un paramètre parmi un taux d'erreurs sur la liaison de télécommunication sans fil entre ledit noeud et le noeud voisin, un délai de transmission sur cette liaison et le maintien de ressource disponible pour un autre voisin sur ladite liaison.

4. Procédé de communication selon l'une quelconque des revendications précédentes, comprenant les étapes suivantes pour chaque noeud mis en oeuvre pour la transmission dudit bloc depuis le noeud source et jusqu'au noeud destinataire :
chaque noeud, suite à la réception de segments dudit bloc de données, mémorise, dans une mémoire (102) du noeud, lesdits segments reçus en correspondance avec la référence unique ;
lorsqu'un noeud relaye certains au moins des segments reçus du bloc à un noeud voisin et qu'aucun segment dudit bloc n'a encore été échangé entre lesdits noeud et noeud voisin, ledit noeud transmet lesdits segments du bloc et la référence unique associée au bloc ; et
selon lequel suite à la réception par ledit noeud (100) de ladite référence unique du bloc transmise par un noeud voisin avec lequel le noeud n'a encore mis en oeuvre aucun échange de segments du bloc, le noeud signale audit noeud voisin les segments du bloc déjà mémorisés dans la mémoire (102) du noeud.

5. Procédé de communication selon la revendication 4, selon lequel le noeud (100) maintient dans sa mémoire (102), en correspondance avec la référence unique du bloc :
- la liste des noeuds voisins auxquels il a relayé des segments du bloc et mémorise en correspondance de chacun desdits noeuds voisins, les segments du bloc qu'il leur a envoyés ; et/ou
- la liste des noeuds voisins qui lui ont relayé des segments du bloc et mémorise en correspondance de chacun desdits noeuds voisins, les segments du bloc qu'il a reçu dudit noeud voisin.

6. Procédé de communication selon la revendication 5, selon lequel le noeud (100) indique en outre dans sa mémoire (102), en correspondance avec lesdits segments du bloc relayés à chaque noeud voisin de la liste, si des acquittements de réception desdits segments du bloc par ledit noeud voisin ont été reçus par ledit noeud.

7. Procédé de communication selon l'une quelconque des revendications précédentes, selon lequel les segments du bloc de données restent mémorisés dans la mémoire (102) du noeud (100) tant qu'un message accusant la bonne réception desdits segments par un noeud situé à N bonds sur la route vers le noeud destinataire n'a pas été reçu par ledit noeud, N étant fixé et supérieur ou égal à 2.

8. Procédé de communication selon l'une quelconque des revendications précédentes, selon lequel le noeud (100), suite à la réception de segments d'un bloc de données à destination de plusieurs noeuds destinataires, utilise les capacités diffusantes d'un lien avec ses voisins pour ne pas n-pliquer les segments à transmettre.

9. Procédé de communication selon l'une quelconque des revendications précédentes, selon lequel lorsqu'il y a déjà eu entre ledit noeud et un noeud voisin, un échange de segments du bloc, des segments supplémentaires du bloc sont échangés entre eux sans transmettre la référence unique associée audit bloc et en transmettant avec lesdits segments supplémentaires du bloc une référence du bloc, locale au bond entre lesdits noeud et noeud voisin, la correspondance entre la référence unique et la référence locale étant mémorisée dans la mémoire du noeud.

10. Procédé de communication selon l'une quelconque des revendications 4 à 9, selon lequel certains au moins des segments d'un bloc reçus par ledit noeud comportent un en-tête indiquant l'adresse du noeud voisin, mais ne comportent pas d'en-tête indiquant une adresse de noeud destinataire,
ledit noeud, suite à la réception de segments dudit bloc, identifiant le noeud destinataire utilisé pour la sélection d'un noeud voisin auquel transférer lesdits segments chaque noeud, en extrayant de sa mémoire l'adresse d'un noeud destinataire précédemment mémorisée en correspondance avec la référence unique du bloc.

11. Programme d'ordinateur à installer dans un noeud (100) d'un réseau maillé (1) de télécommunication sans fil, ledit programme comportant des instructions pour mettre en oeuvre les étapes d'un procédé selon les revendications précédentes lors d'une exécution du programme par des moyens de traitement du noeud.

12. Station (100) émettrice/réceptrice de données, adaptée pour constituer un noeud d'un réseau maillé (1) de télécommunication sans fil, comportant des moyens d'émission et réception sans fil, une mémoire comprenant une table de routage
ladite station étant adaptée pour stocker un ensemble de segments d'un bloc de données à transmettre à destination d'un noeud destinataire (52) et pour sélectionner, en fonction d'au moins un contenu de sa table de routage en correspondance avec ledit noeud destinataire et/ou en fonction des états des liaisons de télécommunication sans fil entre la station et ses noeuds voisins, un premier noeud voisin parmi des noeuds voisins de la station, pour déterminer une taille de segment appropriée à un transfert vers le premier noeud voisin sélectionné, pour reformater au moins un segment de l'ensemble de segment(s) conformément à la taille de segment déterminée et pour transmettre au moins ledit segment reformaté audit premier noeud voisin déterminé via lesdits moyens d'émission et réception sans fil ;
ladite station étant **caractérisée en ce qu'**elle est adaptée pour détecter une modification de ladite table de routage et/ou une modification d'un état des liaisons de télécommunication sans fil entre ladite station et ses noeuds voisins, et pour suite à ladite détection, effectuer une sélection d'un deuxième noeud voisin, stopper la transmission au premier noeud voisin dudit ensemble de segments stocké avant ladite détection, pour déterminer une taille de segment appropriée à un transfert vers le deuxième noeud voisin déterminé, reformater au moins un segment de l'ensemble de segment(s) et non encore transmis au premier noeud voisin conformément à la taille de segment déterminée pour le transfert vers le deuxième noeud voisin et pour transmettre audit deuxième noeud voisin l'au moins un segment reformaté dudit ensemble de segments via lesdits moyens d'émission et réception sans fil.

13. Station (100) émettrice/réceptrice de données, selon la revendication 12, adaptée pour recevoir des messages du premier noeud voisin acquittant la réception par ledit premier noeud de certains desdits segments transmis et adaptée pour :
- ne pas transmettre pas au deuxième noeud voisin lesdits segments dont la réception a été acquittée par le premier noeud voisin ; et/ou
- lorsqu'elle n'a pas reçu de message dudit premier noeud voisin acquittant la bonne réception d'un segment transmis au premier noeud voisin, transmettre, suite à ladite détection, au deuxième noeud voisin ledit segment reformaté conformément à la taille de segment déterminée pour le transfert vers le deuxième noeud voisin.

14. Station (100) émettrice/réceptrice de données selon l'une quelconque des revendications 12 à 13, adaptée pour déterminer une taille de segment appropriée à un transfert vers un noeud voisin en fonction d'au moins un paramètre parmi un taux d'erreurs sur la liaison de télécommunication sans fil entre ladite station et le noeud voisin, un délai de transmission sur cette liaison et le maintien de ressource disponible pour un autre voisin sur ladite liaison.

15. Station (100) émettrice/réceptrice de données, selon l'une quelconque des revendications 12 à 14, adaptée pour, suite à la réception de segments dudit bloc de données, mémoriser, dans la mémoire (102), lesdits segments reçus en correspondance avec la référence unique ;
et pour lors d'un relayage de certains au moins des segments reçus du bloc à un noeud voisin, dans le cas où aucun segment dudit bloc n'a encore été échangé entre ladite station et le noeud voisin, transmettre lesdits segments du bloc et la référence unique associée au bloc ; ladite station étant adaptée en outre pour, suite à la réception par ledit noeud (100) de ladite référence unique du bloc transmise par un noeud voisin avec lequel ladite station n'a encore mis en oeuvre aucun échange de segments du bloc, signaler audit noeud voisin les segments du bloc déjà mémorisés dans la mémoire (102) du noeud.

16. Station (100) émettrice/réceptrice de données, selon la revendication 15, adaptée pour maintenir dans sa mémoire (102), en correspondance avec la référence unique du bloc :
- la liste des noeuds voisins auxquels elle a relayé des segments du bloc et pour mémoriser en correspondance de chacun desdits noeuds voisins, les segments du bloc qu'elle leur a envoyés ; et/ou
- la liste des noeuds voisins qui lui ont relayé des segments du bloc et pour mémoriser en correspondance de chacun desdits noeuds voisins, les segments du bloc qu'elle a reçu dudit noeud voisin.

17. Station (100) émettrice/réceptrice de données, selon l'une quelconque des revendications 12 à 16, adaptés pour mémoriser les segments du bloc de données dans la mémoire (102) du noeud (100) tant qu'un message accusant la bonne réception desdits segments par un noeud situé à N bonds sur la route vers le noeud destinataire n'a pas été reçu par ladite station, N étant fixé et supérieur ou égal à 2.

## Patentansprüche

1. Verfahren zum Kommunizieren in einem Drahtlos-Telekommunikationsnetz (1), das Drahtlos-Telekommunikationsknoten (100) aufweist, wobei das Verfahren beim Übertragen eines Datenblocks von einem Quellknoten (50) an einen Empfängerknoten (52) die folgenden Schritte (51) aufweist, die von einem Knoten durchgeführt werden, wobei der Knoten in einem Speicher (102) des Knotens eine Routing-Tabelle aufweist und der Quellknoten oder ein Weiterschaltungsknoten ist, der zumindest bestimmte Segmente des Blocks empfängt und übermittelt:
- der Knoten, der eine Menge von Segmenten des Datenblocks gespeichert hat, wählt in Abhängigkeit von mindestens einem Inhalt seiner Routing-Tabelle entsprechend dem Empfängerknoten und/oder in Abhängigkeit von den Drahtlos-Telekommunikations-Verbindungszuständen zwischen dem Knoten und seinen Nachbarknoten einen ersten Nachbarknoten aus Nachbarknoten des Knotens aus, bestimmt eine Segmentgröße, die für eine Übertragung an den ersten Nachbarknoten geeignet ist, formatiert mindestens ein Segment aus der Menge von Segmenten entsprechend der bestimmten Segmentgröße neu und übermittelt mindestens das neuformatierte Segment an den ersten bestimmten Nachbarknoten,
wobei das Verfahren **dadurch gekennzeichnet ist, dass** der Knoten eine Veränderung der Routing-Tabelle und/oder eine Veränderung eines Zustands der Drahtlos-Telekommunikations-Verbindungszustände zwischen dem Knoten und seinen Nachbarknoten detektiert und im Anschluss an die Detektion eine Auswahl eines zweiten Nachbarknotens durchführt, die Übermittlung an den ersten Nachbarknoten der vor der Detektion gespeicherten Segmentmenge anhält, eine Segmentgröße bestimmt, die für eine Übertragung an den zweiten bestimmten Nachbarknoten geeignet ist, mindestens ein Segment aus der Menge von Segmenten, das noch nicht an den ersten Nachbarknoten übertragen wurde, entsprechend der für die Übertragung an den zweiten Nachbarknoten bestimmten Segmentgröße neu formatiert und das mindestens eine neu formatierte Segment der Menge von Segmenten an den zweiten Nachbarknoten übermittelt.

2. Kommunikationsverfahren gemäß Anspruch 1, wobei der Knoten Nachrichten vom ersten Nachbarknoten empfängt, die den Empfang von bestimmten der übermittelten Segmente durch den ersten Knoten bestätigen, und wobei:
- der Knoten die Segmente, deren Empfang durch den ersten Nachbarknoten bestätigt wurde, nicht an den zweiten Nachbarknoten übermittelt, und/oder
- der Knoten, wenn der Knoten keine Nachricht von dem ersten Nachbarknoten empfangen hat, die den korrekten Empfang eines an den ersten Nachbarknoten übermittelten Segments bestätigt, das Segment, das entsprechend der für die Übertragung an den zweiten Nachbarknoten bestimmten Segmentgröße neu formatiert wurde, im Anschluss an die Detektion an den zweiten Nachbarknoten übermittelt.

3. Kommunikationsverfahren gemäß irgendeinem der vorhergehenden Ansprüche, wobei eine Segmentgröße, die für eine Übertragung an einen Nachbarknoten geeignet ist, in Abhängigkeit von mindestens einem Parameter aus einer Fehlerquote auf der drahtlosen Telekommunikationsverbindung zwischen dem Knoten und dem Nachbarknoten, einer Übertragungsverzögerung auf der Verbindung und dem Aufrechterhalten einer verfügbaren Ressource für einen anderen Nachbarn auf dieser Verbindung bestimmt wird.

4. Kommunikationsverfahren gemäß irgendeinem der vorhergehenden Ansprüche, das für jeden Knoten die folgenden Schritte aufweist, die für die Übermittlung des Blocks vom Quellknoten aus und bis zum Empfängerknoten durchgeführt werden:
im Anschluss an das Empfangen von Segmenten des Datenblocks speichert jeder Knoten in einem Speicher (102) des Knotens die empfangenen Segmente entsprechend der einzigartigen Referenz;
wenn ein Knoten zumindest bestimmte der empfangenen Segmente des Blocks an einen Nachbarknoten weiterleitet und noch kein Segment des Blocks zwischen dem Knoten und dem Nachbarknoten ausgetauscht wurde, übermittelt der Knoten die Segmente des Blocks und die dem Block zugeordnete einzigartige Referenz; und wobei der Knoten, im Anschluss an das Empfangen der einzigartigen Referenz des Blocks durch den Knoten, die durch einen Nachbarknoten übermittelt wurde, mit dem der Knoten noch keinen Austausch von Segmenten des Blocks durchgeführt hat, dem Nachbarknoten die Segmente des Blocks signalisiert, die bereits im Speicher (102) des Knotens gespeichert sind.

5. Kommunikationsverfahren gemäß Anspruch 4, wobei der Knoten (100) entsprechend der einzigartigen Referenz des Blocks in seinem Speicher (102):
- die Liste der Nachbarknoten behält, an die er Segmente des Blocks weitergeleitet hat, und die Segmente des Blocks, die er ihnen gesendet hat, jedem der Nachbarknoten entsprechend speichert, und/oder
- die Liste der Nachbarknoten behält, die ihm Segmente des Blocks weitergeleitet haben, und die Segmente des Blocks, die er von dem Nachbarknoten empfangen hat, jedem der Nachbarknoten entsprechend speichert.

6. Kommunikationsverfahren gemäß Anspruch 5, wobei der Knoten (100) ferner in seinem Speicher (102) entsprechend den Segmenten des Blocks, die an jeden Nachbarknoten der Liste weitergeleitet wurden, anzeigt, ob Empfangsbestätigungen der Segmente des Blocks durch den Nachbarknoten von dem Knoten empfangen wurden.

7. Kommunikationsverfahren gemäß irgendeinem der vorhergehenden Ansprüche, wobei die Segmente des Datenblocks solange in dem Speicher (102) des Knotens (100) gespeichert bleiben, bis eine Nachricht, die den korrekten Empfang der Segmente durch einen Knoten bestätigt, der an N Sprüngen auf der Route in Richtung zu dem Empfängerknoten positioniert ist, von dem Knoten empfangen wird, wobei N festgelegt und größer oder gleich 2 ist.

8. Kommunikationsverfahren gemäß irgendeinem der vorhergehenden Ansprüche, wobei der Knoten (100) im Anschluss an das Empfangen von Segmenten eines Datenblocks mit dem Ziel mehrerer Empfängerknoten die Verbreitungskapazitäten einer Verbindung mit seinen Nachbarn verwendet, um die zu übermittelnden Segmente nicht zu n-plizieren.

9. Kommunikationsverfahren gemäß irgendeinem der vorhergehenden Ansprüche, wobei, wenn es bereits einen Austausch von Segmenten des Blocks zwischen dem Knoten und einem Nachbarknoten gegeben hat, zusätzliche Segmente des Blocks untereinander ausgetauscht werden, ohne die dem Block zugeordnete einzigartige Referenz zu übermitteln, und wobei, wenn mit den zusätzlichen Segmenten des Blocks eine Referenz des Blocks übermittelt wird, die bezüglich des Sprungs zwischen dem Knoten und dem Nachbarknoten lokal ist, die Übereinstimmung zwischen der einzigartigen Referenz und der lokalen Referenz im Speicher des Knotens gespeichert wird.

10. Kommunikationsverfahren gemäß irgendeinem der Ansprüche 4 bis 9, wobei zumindest bestimmte der Segmente eines Blocks, die von dem Knoten empfangen werden, einen Kopf aufweisen, der die Adresse des Nachbarknotens angibt, jedoch keinen Kopf aufweisen, der eine Adresse des Empfängerknotens angibt,
wobei der Knoten im Anschluss an das Empfangen von Segmenten des Blocks den Empfängerknoten identifiziert, der für die Auswahl eines Nachbarknotens verwendet wird, an den die Segmente zu übertragen sind, jeder Knoten, wobei die Adresse eines Empfängerknotens, der zuvor gespeichert wurde, entsprechend der einzigartigen Referenz des Blocks extrahiert wird.

11. Computerprogramm zum Installieren in einem Knoten (100) eines vermaschten Drahtlos-Telekommunikationsnetzwerks (1), wobei das Programm Befehle zum Durchführen der Schritte eines Verfahrens gemäß den vorhergehenden Ansprüchen bei einer Ausführung des Programms durch Verarbeitungsmittel des Knotens aufweist.

12. Daten-Sende-/Empfangsstation (100), die eingerichtet ist, einen Knoten eines vermaschten Drahtlos-Telekommunikationsnetzwerks (1) zu bilden, aufweisend drahtlose Sende- und Empfangsmittel, einen Speicher, der eine Routing-Tabelle aufweist,
wobei die Station angepasst ist, eine Menge von Segmenten eines Datenblocks zu speichern, die an einen Empfängerknoten (52) zu übertragen sind, und in Abhängigkeit von mindestens einem Inhalt ihrer Routing-Tabelle entsprechend dem Empfängerknoten und/oder in Abhängigkeit der Drahtlos-Telekommunikations-Verbindungszustände zwischen der Station und ihren Nachbarknoten einen ersten Nachbarknoten aus Nachbarknoten der Station auszuwählen, um eine Segmentgröße zu bestimmen, die für eine Übertragung an den ersten ausgewählten Nachbarknoten geeignet ist, um zumindest ein Segment der Segmentmenge entsprechend der bestimmten Segmentgröße neu zu formatieren und über die drahtlosen Sende- und Empfangsmittel zumindest das neu formatierte Segment an den ersten bestimmten Nachbarknoten zu übermitteln,
wobei die Station **dadurch gekennzeichnet ist, dass** sie angepasst ist, eine Veränderung der Routing-Tabelle und/ oder eine Veränderung eines Zustands der Drahtlos-Telekommunikation-Verbindungen zwischen der Station und ihren Nachbarknoten zu detektieren, und im Anschluss an die Detektion eine Auswahl eines zweiten Nachbarknotens durchzuführen, vor der Detektion die Übermittlung an den ersten Nachbarknoten der gespeicherten Menge von Segmenten anzuhalten, um eine Segmentgröße zu bestimmen, die für eine Übertragung an den zweiten bestimmten Nachbarknoten geeignet ist, mindestens ein Segment der Segmentmenge, das ferner noch nicht an den ersten Nachbarknoten übermittelt wurde, entsprechend der bestimmten Segmentgröße für die Übertragung an den zweiten Nachbarknoten neu zu formatieren, und das mindestens eine neu formatierte Segment der Segmentmenge über die drahtlosen Sende- und Empfangsmittel an den zweiten Nachbarknoten zu übermitteln.

13. Daten-Sende-/Empfangsstation (100) gemäß Anspruch 12, die angepasst ist, Nachrichten vom ersten Nachbarknoten zu empfangen, die den Empfang bestimmter der übermittelten Segmente durch den ersten Knoten bestätigen, und die angepasst ist, um:
- die Segmente, deren Empfang durch den ersten Nachbarknoten bestätigt wurde, nicht an den zweiten Nachbarknoten zu übermitteln, und/ oder,
- wenn sie keine Nachricht von dem ersten Nachbarknoten erhalten hat, die den korrekten Empfang eines Segments bestätigt, das an den ersten Nachbarknoten übermittelt wurde, das Segment, das entsprechend der bestimmten Segmentgröße für die Übertragung an den zweiten Nachbarknoten neu formatiert wurde, im Anschluss an die Detektion dem zweiten Nachbarknoten zu übermitteln.

14. Daten-Sende-/Empfangsstation (100) gemäß irgendeinem der Ansprüche 12 bis 13, die angepasst ist, um in Abhängigkeit von mindestens einem Parameter aus einer Fehlerquote auf der drahtlosen Telekommunikationsverbindung zwischen der Station und dem Nachbarknoten, einer Übertragungsverzögerung auf der Verbindung und dem Aufrechterhalten einer verfügbaren Ressource für einen anderen Nachbarn auf dieser Verbindung eine Segmentgröße zu bestimmen, die für eine Übertragung an einen Nachbarknoten geeignet ist.

15. Daten-Sende-/Empfangsstation (100) gemäß irgendeinem der Ansprüche 12 bis 14, die angepasst ist, um im Anschluss an das Empfangen von Segmenten des Datenblocks die empfangenen Segmente entsprechend der einzigartigen Referenz im Speicher (102) zu speichern, und
um bei einem Weiterleiten von zumindest bestimmten der empfangenen Segmente des Blocks an einen Nachbarknoten, in einem Fall, in dem noch kein Segment des Blocks zwischen der Station und dem Nachbarknoten ausgetauscht wurde, die Segmente des Blocks und die dem Block zugeordnete einzigartige Referenz zu übermitteln, wobei die Station ferner angepasst ist, um im Anschluss an das Empfangen der einzigartigen Referenz des Blocks durch den Knoten (100), die durch einen Nachbarknoten übermittelt wurde, mit dem die Station noch keinen Austausch von Segmenten des Blocks durchgeführt hat, dem Nachbarknoten die Segmente des Blocks zu signalisieren, die bereits im Speicher (102) des Knotens gespeichert sind.

16. Daten-Sende-/Empfangsstation (100) gemäß Anspruch 15, die angepasst ist, um entsprechend der einzigartigen Referenz des Blocks in ihrem Speicher (102):
- die Liste der Nachbarknoten aufzubewahren, an die sie Segmente des Blocks weitergeleitet hat, und jedem der Nachbarknoten entsprechend die Segmente des Blocks zu speichern, die sie ihnen gesendet hat, und/oder
- die Liste der Nachbarknoten aufzubewahren, die ihr Segmente des Blocks weitergeleitet haben, und um jedem der Nachbarknoten entsprechend die Segmente des Blocks zu speichern, die sie von dem Nachbarknoten empfangen hat.

17. Daten-Sende-/Empfangsstation (100) gemäß irgendeinem der Ansprüche 12 bis 16, die angepasst ist, die Segmente des Datenblocks solange im Speicher (102) des Knotens (100) zu speichern, bis eine Nachricht, die den korrekten Empfang der Segmente durch einen Knoten bestätigt, der an N Sprüngen auf der Route zu dem Empfängerknoten positioniert ist, von der Station empfangen wurde, wobei N festgelegt und größer oder gleich 2 ist.

## Claims

1. A communication method in a wireless telecommunications (1) network comprising wireless telecommunications nodes (100), said method comprising, during the transmission of a data block from a source node (50) to a destination node (52), the following steps (51) implemented by a node, said node comprising a routing table in a memory (102) of the node and being the source node or a relay node receiving and transmitting at least some segments of said block:
- the node, having stored a set of segments of said data block, selects, based on at least one content of its routing table corresponding to said destination node and/or depending on states of the wireless telecommunications connections between said node and its adjacent nodes, a first adjacent node from among the nodes adjacent to the node; determines an appropriate segment size for a transfer to the first adjacent node; reformats at least one segment from the set of segment(s) based on the determined segment size and sends at least said reformatted segment to said first determined adjacent node;
said method being **characterized in that** the node detects a modification of said routing table and/or a modification of the state of the wireless telecommunications links between said node and its adjacent nodes, and following that detection, selects a second adjacent node, stops the transmission to the first adjacent node of said set of segments stored before said detection, determines an appropriate segment size for a transfer to the second determined adjacent node, reformats at least one segment from the set of segment(s) not yet transmitted to the first adjacent node based on the determined segment size for the transfer to the second adjacent node and transmits said at least one reformatted segment from said set of segments to said second adjacent node.

2. The communication method according to claim 1, wherein the node receives messages from the first adjacent node acknowledging receipt by said first node of some of said transmitted segments and wherein:
- said node does not send the second adjacent node said segments whereof receipt has been acknowledged by the first adjacent node; and/or
- when the node has not received a message from said first adjacent node acknowledging proper receipt of the segment transmitted to the first adjacent node, the node transmits said reformatted segment to the second adjacent node, following said detection, based on the determined segment size for transfer to the second adjacent node.

3. The communication method according to any one of the preceding claims, wherein an appropriate segment size for transfer to an adjacent node is determined based on at least one parameter from among an error rate on the wireless communications link between the node and the adjacent node, a transmission delay on that link and the maintenance of available resources for another neighbor on said link.

4. The communication method according to any one of the preceding claims, comprising the following steps for each node implemented to transmit said block from the source node to the destination node:
each node, following receipt of segments from said data block, stores said received segments in correspondence with their unique reference in the memory of the node;
when a node relays at least some of the segments received from the block to an adjacent node and no segment from said block has been exchanged yet between said node and adjacent node, said node transmits said segments of the block and the unique reference associated with the block; and wherein following the receipt by said node (100) of said unique reference of the block transmitted by an adjacent node with which the node has not yet implemented any exchange of segments of the block, the node indicates the segments of the block already stored in the memory (102) of the node to the adjacent node.

5. The communication method according to claim 4, wherein the node (100) maintains, in its memory (102), in correspondence with the unique reference of the block:
- the list of adjacent nodes to which it has relayed segments from the block and stores, in correspondence with each of said adjacent nodes, the segments of the block that it has sent them; and/or
- the list of adjacent nodes that have relayed segments from the block to it and stores, in correspondence with each of said adjacent nodes, the segments of the block that it has received from said adjacent node.

6. The communication method according claim 5, wherein the node (100) further indicates, in its memory (102), in correspondence with said segments of the block relayed to each adjacent node of the list, whether acknowledgments of receipt of said segments from the block by said adjacent node have been received by said node.

7. The communication method according to any one of the preceding claims, wherein the segments of the data block remain stored in the memory (102) of the node (100) as long as a message acknowledging proper receipt of said segments by a node situated N hops away on the route toward the destination node has not been received by said node, N being fixed and greater than or equal to 2.

8. The communication method according to any one of the preceding claims, wherein the node (100), after receiving segments of a data block sent to several recipient nodes, uses the broadcast capabilities of a link with its neighbors so as not to n-plicate the segments to be transmitted.

9. The communication method according to any one of the preceding claims, wherein when segments of the block have already been exchanged between said node and an adjacent node, additional segments of the block are exchanged between them without transmitting the unique reference associated with said block and by transmitting, with said additional segments of the block, a reference of the block, local to the hop between said node and adjacent node, the correspondence between the unique reference and the local reference being stored in the memory of the node.

10. The communication method according to any one of claims 4 to 9, wherein at least some of the segments of a block received by said node comprise a header indicating the address of the adjacent node, but do not comprise a header indicating a destination node address,
said node, following the receipt of segments from said block, identifying the destination node used to select an adjacent node to which to transfer said segments each node, by extracting the address from its memory of a destination node previously stored in correspondence with the unique reference of the block.

11. A computer program to be installed in a node (100) of a wireless telecommunications mesh network (1), said program comprising instructions to carry out the steps of a method according to the preceding claims when the program is executed by processing means of the node.

12. A data transceiver set (100), suitable for constituting a node of a wireless telecommunications mesh network (1), comprising wireless transceiver means, a memory comprising a routing table,
said set being suitable for storing a set of segments of a data block to be transmitted to a destination node (52) and for selecting, based on at least one content of its routing table in correspondence with said destination node and/or based on states of the wireless telecommunications links between the set and its adjacent nodes, a first adjacent node from among the adjacent nodes of the set, in order to determine the segment size appropriate for a transfer to the first selected adjacent node, reformat at least one segment from the set of segment(s) based on the determined segment size, and transmit at least said reformatted segment to said determined first adjacent node via said wireless transceiver means;
said set being **characterized in that** said set is being adapted for detecting a modification of said routing table and/or a modification of the state of the wireless telecommunications links between said set and its adjacent nodes, and following that detection, selecting a second adjacent node, stopping the transmission to the first adjacent node of said set of segments stored before said detection, to determine an appropriate segment size for a transfer to the second determined adjacent node, for reformatting at least one segment from the set of segment(s) and not yet transmitted to the first adjacent node based on the determined segment size for the transfer to the second adjacent node and for transmitting said at least one reformatted segment from said set of segments to said second adjacent node via said wireless transceiver means.

13. The data transceiver set (100), according to claim 12, adapted to receive messages from the first adjacent node acknowledging receipt by said first node of some of said transmitted segments and adapted for:
- not sending to the second adjacent node said segments whereof receipt has been acknowledged by the first adjacent node; and/or
- when it has not received a message from said first adjacent node acknowledging proper receipt of the segment transmitted to the first adjacent node, transmitting said reformatted segment to the second adjacent node following said detection based on the determined segment size for transfer to the second adjacent node.

14. The data transceiver set (100), according to any one of claims 12 or 13, adapted for determining an appropriate segment size for transfer to an adjacent node based on at least one parameter from among an error rate on the wireless communications link between said set and the adjacent node, a transmission delay on that link, and the maintenance of available resources for another neighbor on said link.

15. The data transceiver set (100), according to any one of claims 12 to 14, adapted, following receipt of segments from said data block, for storing said received segments in correspondence with their unique reference in the memory (102) of the node;
and so that during relaying of at least some of the segments received from the block to an adjacent node, in the case where no segment from said block has been exchanged yet between said set and the adjacent node, transmitting said segments of the block and the unique reference associated with the block; said set further be able, following the receipt by said node (100) of said unique reference of the block transmitted by an adjacent node with which said set has not yet implemented any exchange of segments of the block, to signal the segments of the block already stored in the memory (102) of the node to the adjacent node.

16. The data transceiver set (100), according to claim 15, able to maintain in its memory (102), in correspondence with the unique reference of the block:
- the list of adjacent nodes to which it has relayed segments from the block and to store in correspondence with each of said adjacent nodes, the segments of the block that it has sent them; and/or
- the list of adjacent nodes that have relayed segments from the block to it and to store, in correspondence with each of said adjacent nodes, the segments of the block that it has received from said adjacent node.

17. The data transceiver set (100), according to any one of claims 12 to 16, adapted to store the segments of the data block in the memory (102) of the node (100) as long as a message acknowledging proper receipt of said segments by a node situated N hops away on the route toward the destination node has not been received by said set, N being fixed and greater than or equal to 2.
